# EUROPEAN PATENT APPLICATION

(11) **EP 2 545 774 A1**
(43) Date of publication of application: **16.01.2013**
(21) Application number: 12175477.4
(22) Date of filing: 09.07.2012
(51) Int. Cl.: A01N 25/04, A01N 41/10, A01P 13/00

(54) **Aqueous HPPD inhibitor suspension concentrate compositions comprising smectite clay**

(30) Priority: 12.07.2011 EP 11173558
(71) Applicant: Cheminova A/S, 7620 Lemvig (DK)
(72) Inventor: Battal, Turgut, 7600 Struer (DK)
(74) Representative: Rasmussen, Torben Ravn

(57) **Abstract**

The present invention provides herbicidal, aqueous suspension concentrate compositions comprising certain active compounds, adjuvants and a structuring agent selected among smectite clays suitable for controlling weeds in crops of cultivated plants.

## Description

### Introduction

The present invention relates to aqueous suspension concentrate compositions comprising one or more herbicidal active compounds of formula (I) shown below as active ingredient(s) as well as use of the aqueous suspension concentrate compositions in a dilution with water as a herbicide, i.e. aqueous suspension concentrate composition comprising
a) at least one compound of the formula (I) as shown below;
b) a structuring agent selected among smectite clays; and
c) one or more adjuvants.

### Background

The herbicidal active compounds subject of the present invention are known to act by inhibiting hydroxyphenyl pyruvate dioxygenase. Inhibition of this key enzyme blocks the biosynthesis of plastoquinone (PQ) from tyrosine. PQ is an essential cofactor in the biosynthesis of carotenoid pigments, which are essential for photoprotection of the photosynthetic centres. These herbicides are phloem-mobile bleachers, which cause the light-exposed new meristems, and leaves to emerge white where, in the absence of carotenoids, chlorophyll is photo-destroyed, and becomes itself an agent of photo-destruction via the photo-generation of singlet oxygen. Almost all such herbicides exhibits a tendency to chemically degrade in aqueous solution, although often only a slow and long term degradation. However, the instability does result in a noticeable reduction in active ingredient content when, e.g., aqueous concentrates comprising these herbicidal active ingredients are stored for reasonable lengths of time, particularly in warm conditions. From both a commercial and end-user point of view it is desirable to have products that remain stable over an extended period of time, even when stored or applied under warm conditions, without degradation and possible formation of harmful (e.g. phytotoxic) byproducts.

Use of smectite type clays in solid formulations of herbicides is described in international patent publications Nos. WO 2010/003499 A2 and WO 2010/054812 A1. Use of bentonites and hectorites in oil based dispersions comprising herbicidal active substances is suggested in United States patent application no. US 2010/0144524 A1. In Japense patent publication no. JP 5105601 use of synthetic smectite in an aqueous suspension concentrate comprising the herbicidal active compound benzofenap is disclosed, this compound, however, being structurally different from the compounds of formula (I) shown below.

Aqueous suspension concentrates (SC) of pesticides, e.g. herbicides, have been used more and more frequently in recent years, as they have often show less phytotoxicity to crops, are safer when prepared and applied because of the use of no or only an insignificant amount of organic solvent, and are suited for an aerial application.

An aqueous suspension concentrate is a composition obtained by suspending fine particles of a compound (e.g. a herbicide), which is solid at ordinary temperature, and not soluble or only partially soluble in water, the fine particles being uniformly dispersed in water. A stable suspension is usually obtained by adding a variety of antisettling agents to the concentrate in order to prevent a precipitation of the solid compound during a long period of storage.

To secure a long-term physical stability, it is important to select a proper combination of physical properties of the solid compound to be suspended and the antisettling agents in order to disperse the solid material uniformly in water. Therefore, the choice of antisettling agents, suitable for the physical properties of the solid compound, is an important factor for obtaining a stabilized aqueous suspension concentrate composition. Antisettling systems are typically composed of a structuring agent, which is a very finely dispersed phase, and a thickener, which builds up a network in the suspension to support the antisettling properties of the structuring agent.

Several publications relate to suspension concentrate compositions of agrochemical active ingredients. For example, international patent publication no. WO 2006/003371 discloses hydroxyphenyl pyruvate dioxygenase inhibitors as herbicidal active ingredients suspended in water, wherein the water comprises an electrolyte. The compositions are said to be stable over a long period of time. Suspension concentrates of mesotrione having a particle size of less than 1 micron is described in international patent publication WO 2005/055714-A2. In international patent publication WO 02/063956-A1 suspension concentrates of insoluble or partially soluble agrochemical active ingredients are described, wherein use of a suspending system comprising silica and alkylpolyvinylpyrrolidone is disclosed. The concentrates are said to be stable and test results from storage at 40°C for 16 weeks of a composition comprising the agrochemical active ingredient mesotrione apparently supports this. However, as shown herein, storage at higher temperatures causes phase separation and sedimentation of solids.

Many governments have emphasized the importance of reducing the total load of pesticides applied to crops and the environment in general. This can be achieved by increasing the biological activity of pesticides. An adjuvant has been defined as a formulant designed to enhance the activity or other properties of a herbicide or pesticide mixture. Most adjuvants are sold to be added to the applicator's spray tank at the point of use, where a pesticide product or formulation is combined in the spray tank with the adjuvant by the applicator. With the array of different adjuvants that are available, it can be advantageous in certain cases to provide the active component and the adjuvant combined in the same product. There are types of products that have been advertised in the industry as 'Fully loaded' or formulations with built-in adjuvant, meaning that the pesticide or herbicide products contain a sufficient amount of surfactants or other additives so that under most use and application conditions the products do not require other adjuvants. However, formulation chemists face many challenges when developing pesticide formulations that include adjuvants. Those challenges can include the selection of the type of formulation, active ingredient concentration, proper adjuvant(s) and amount to maximize performance while maintaining product stability.

It has now been found that suspension concentrate compositions comprising compounds of formula (I) with built-in adjuvants demonstrating good storage stability for prolonged periods of time and/or at elevated temperatures may be prepared when a smectite clay is used as a structuring agent.

### Description of the Invention

In one aspect of the present invention there is provided an aqueous suspension concentrate composition comprising
a) at least one compound of the formula (I), 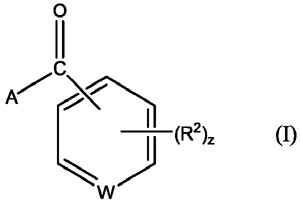 wherein,
   A is a group selected from (A-1) to (A-4) 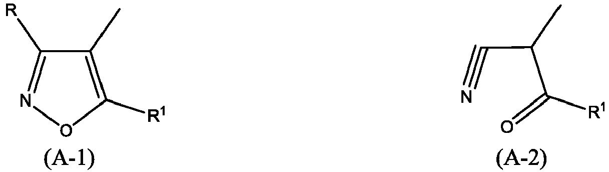 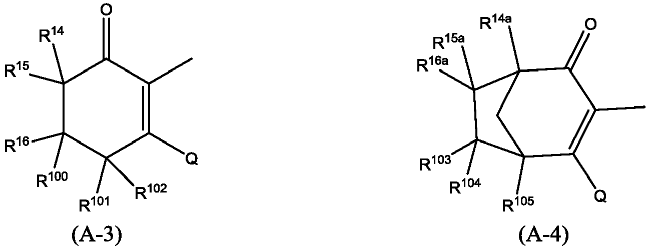 in which W is N, CH, or CR²;
   R is a hydrogen or halogen atom; a straight or branched alkyl, alkenyl or alkynyl group containing up to six carbon atoms, said group optionally being substituted by one or more halogen atoms; a cycloalkyl group containing from 3 to 6 carbon atoms, said group optionally being substituted by one or more groups R⁵, one or more halogen atoms, or a group -CO₂R³; or a group selected from -CO₂R³, -COR⁵, cyano, nitro, -CONR³R⁴ or -S(O)ₖR¹³;
   R¹ is a straight or branched alkyl, alkenyl or alkynyl group containing up to six carbon atoms, said group optionally being substituted by one or more halogen atoms; or a cycloalkyl group containing from three to six carbon atoms, said group optionally being substituted by one or more groups R⁵ or one or more halogen atoms;
   R² is a halogen atom; a straight or branched alkyl, alkenyl or alkynyl group containing up to six carbon atoms, said group optionally being substituted by one or more halogen atoms, or one or more groups -OR⁵; or R² is a group selected from nitro, cyano, -CO₂R⁵, -S(O)ₚR⁶, -O(CH₂)ₘOR⁵, -COR⁵ -NR¹¹R¹², -N(R⁸)SO₂R⁷ -N(R⁸)CO₂R⁷ -OR⁵, -OSO₂R⁷, -SO₂NR³R⁴, -CONR³R⁴, -CSNR³R⁴, -(CR⁹R¹⁰)-S(O)_{q}R⁷, or -SF₅; or two groups R², on adjacent carbon atoms of the ring may, together with the carbon atoms to which they are attached, form a 5 to 7 membered saturated or unsaturated heterocyclic ring containing up to three ring heteroatoms selected from nitrogen, oxygen and sulfur, which ring is optionally substituted by one or more groups selected from halogen, nitro, -S(O)ₚR¹³, C₁₋₄ alkyl, C_{1- 4} alkoxy, C₁₋₄ haloalkyl, C₁₋₄ haloalkoxy, =O (or a 5-or 6-membered cyclic acetal thereof), and =NO-R³, it being understood that a sulphur atom, where present in the ring, may be in the form of a group -SO₂- or -SO-;
   z is an integer of one to four, wherein when z is greater than one, the groups R² may be the same or different;
   R³, R⁴, and R¹⁰⁹ are each independently a hydrogen atom, or a straight or branched alkyl group containing up to six carbon atoms, said group optionally being substituted by one or more halogen atoms;
   R⁵ and R¹¹⁰ are each independently a straight or branched alkyl group containing up to six carbon atoms, said group optionally being substituted by one or more halogen atoms, one or more groups R¹⁷, a C₁₋₄ alkoxy, or a straight or branched alkenyl or alkynyl group containing from two to six carbon atoms, said group optionally being substituted by one or more halogen atoms;
   R⁶ and R⁷, which may be the same or different, are each R⁵; or a phenyl optionally substituted by from one to five groups, which may be the same or different and selected from a halogen atom, a straight or branched alkyl group containing up to six carbon atoms, said group optionally being substituted by one or more halogen atoms, nitro, CO₂R⁵, -S(O)ₚR¹³, -NR¹¹NR¹², -OR⁵, or -CONR³R₄;
   R⁸, R⁹ and R¹⁰ are each a hydrogen atom or R⁶;
   R¹¹ and R¹² are each a hydrogen atom or R⁵;
   R¹³ and R¹¹¹ are each a straight or branched alkyl group containing up to six carbon atoms, said group optionally being substituted by one or more halogen atoms;
   R¹⁷ is a 5 to 7 membered saturated or unsaturated heterocyclic ring containing up to three heteroatoms selected from of O, N, S;
   Q is hydroxy, C₁₋₆ alkoxy, OR¹¹², SR¹¹², or SR¹¹¹;
   R¹⁴, R^{14a}, R¹⁵, R^{15a}, R¹⁶, R^{16a}, R¹⁰⁰, R¹⁰¹, R¹⁰², R¹⁰³, R¹⁰⁴, and R¹⁰⁵ are each the same or different groups selected from hydrogen, R¹¹⁰,-(CH₂)ᵤCO₂R¹⁰⁹, halogen, cyano, C₁₋₆ alkoxy, -(CH₂)ₓ-[phenyl optionally substituted by one to five groups R¹¹³, which may be the same or different], or cycloalkyl containing from three to six carbon atoms, the group optionally being substituted by C₁₋₆ alkyl or -S(O)ₚR¹¹¹;
   R¹¹² is phenyl, optionally substituted by from one to five groups selected from halogen, C₁₋₆ alkyl, C₁₋₆ haloalkyl, C₁₋₆ alkoxy, and nitro;
   R¹¹³ is a group selected from halogen, R¹¹⁴, nitro, cyano, -CO₂R¹¹⁵, S(O)ₚR¹¹¹, -OR¹¹¹, or NR¹¹⁵R¹¹⁶;
   R¹¹⁴ is a straight or branched alkyl group containing one to three carbon atoms, said group optionally being substituted by one or more halogen atoms;
   R¹¹⁵ and R¹¹⁶, which may be the same or different, are each independently a hydrogen atom or R¹¹⁰;
   p, q, and u are each independently zero, one, or two;
   k and m are each independently one, two, or three;
   x is zero or one;
   y is an integer from one to four, wherein when y is greater than one, the groups R⁹ and R¹⁰ may be the same or different;
   or an agriculturally acceptable salt or metal complex thereof; and
b) a structuring agent selected among smectite clays; and
c) one or more adjuvants.

By the term 'agriculturally acceptable salts' is meant salts of the cations or anions which are known and accepted in the art for the formation of salts for agricultural or horticultural use. Suitable salts with bases include alkali metal (e. g. sodium and potassium), alkaline earth metal (e. g. calcium and magnesium), ammonium and amine (e. g. diethanolamine, triethanolamine, octylamine, morpholine and dioctylmethylamine) salts. Suitable acid addition salts, e. g. formed by compounds of formula (I) containing an amino group, include salts with inorganic acids, for example hydrochlorides, sulphates, phosphates and nitrates and salts with organic acids for example acetic acid.

It will be understood that the term 'dione' as used in this specification including the accompanying claims, does not exclude the possible presence of additional C=O groups, such as in triones.

Compounds of formula (1) may exist in enolic tautomeric forms that may give rise to geometric isomers around the enolic double bond. Furthermore, in certain cases the above substituents may contribute to optical isomerism and/or stereoisomerism. All such forms and mixtures thereof are embraced by the present invention.

In the definitions of symbols in this specification including the accompanying claims unless otherwise specified, the following definitions generally apply to the radicals in the formulae (I): 'halogen' means a fluorine, chlorine, bromine or iodine atom; and 'alkyl groups' means straight- or branched-chain groups containing from 1 to 6 carbon atoms.

In a certain embodiment of the invention, formula (Ia) or (Ib) are preferred; T = H or R²;

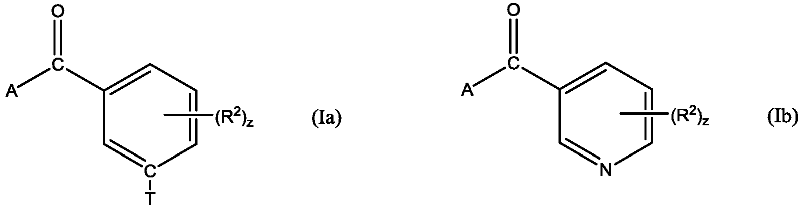

Most preferred are compounds of formula (Ia).

The benzoyl ring of the compounds of formula (Ia) is preferably 2,4-disubstituted, 2,3-disubstituted, or 2,3,4-trisubstituted. The nicotinyl ring of compounds (Ib) is preferably di-substituted.

Preferably in formulae (A-3) and (A-4), the groups R¹⁴, R¹⁵, R¹⁶ R¹⁰⁰, R¹⁰¹, R¹⁰², R¹⁰³, R^{14a}, R^{15a}, R^{16a}, R¹⁰⁴, and R¹⁰⁵ are each hydrogen or lower alkyl (preferably hydrogen, methyl or ethyl). Preferably in formulae (A-1) and (A-2), R is hydrogen or -CO₂R³, wherein R³ is a straight or branched alkyl group containing up to three carbon atoms and R¹ is preferably cyclopropyl or 1-methylcyclopropyl.

A preferred class of compounds of formula (Ia) are those wherein A is (A-1) and (A-2); T = H; R is hydrogen or -CO₂Et; R¹ is cyclopropyl or 1-methylcyclopropyl; R² is a halogen atom or a group selected from -CF₃, -CH₃, -CH₂CH₃, -S(O)ₚCH₃, -CH₂S(O)_{q}CH₃, -NO₂, -OR⁵, and optionally halogenated methoxy or ethoxy; and z is two or three.

A further preferred class of compounds of formula (Ia) wherein A is (A-3) are those wherein: T is hydrogen or R²;
R¹⁴, R¹⁵, R¹⁶, R¹⁰⁰, R¹⁰¹, and R¹⁰² are each hydrogen;
and two groups R² is a halogen atom or a group selected from -CF₃, -CH₃, - CH₂CH₃, -S(O)ₚCH₃, -CH₂S(O)_{q}CH₃, -NO₂, -OR⁵, and optionally halogenated methoxy or ethoxy; and z is two or three; or two groups R² on adjacent carbon atoms of the phenyl ring may, together with the carbon atoms to which they are attached, combine to form a 6 membered saturated heterocyclic ring which is fused to the 2,3 or 3,4 positions of the benzoyl ring; wherein the heterocyclic ring contains a sulphur atom attached to the 4 position of the benzoyl ring, optionally in the form of a group -SO- or -SO₂-, and which ring is substituted by a 5- or 6- membered acetal thereof.

A further preferred class of compounds of formula (Ia) wherein A is (A-4) are those wherein: T is hydrogen;
R^{14a}, R^{15a}, R^{16a}, R¹⁰³, R¹⁰⁴, and R¹⁰⁵ are each hydrogen;
Q is SR¹¹²;
and R², is a halogen atom or a group selected from -CF₃, -CH₃, -CH₂CH₃, - S(O)ₚCH₃, -CH₂S(O)_{q}CH₃, -NO₂, -OR⁵, and optionally halogenated methoxy or ethoxy; and z is two or three;

A preferred class of compounds of formula (Ib) wherein A is (A-4) are those wherein: R^{14a}, R^{15a}, R^{16a}, R¹⁰³, R¹⁰⁴ and R¹⁰⁵ are each hydrogen;
Q is OH;
and R² is a halogen atom or a group selected from -CF₃, -CH₃, -CH₂CH₃, - S(O)ₚCH₃, -CH₂S(O)qCH₃, -NO₂, -OR⁵, and optionally halogenated methoxy or ethoxy; and z is two or three;

A more preferred class of compounds of formula (Ia) are those having the formula (Ia-1): 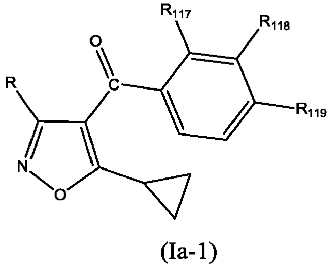 wherein:
R is hydrogen or -CO₂Et;
R¹¹⁷ is selected from -S(O)ₚMe, Me, Et, Cl, Br, F, methoxy, ethoxy and - CH₂S(O)_{q}Me;
R¹¹⁸ is selected from a hydrogen atom, Cl, Br, F, methoxy, ethoxy and - S(O)ₚMe;
R¹¹⁹ is selected from a hydrogen atom, Cl, Br, F, methoxy and CF₃;
and p and q each independently have the values zero, one or two.

Preferred compounds are those in which a substituted phenyl ring, as defined in formula (Ia), is attached to a grouping:

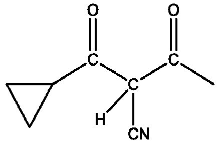

Such compounds in which the phenyl ring is substituted by two groups independently selected from halogen, alkyl, S(O)ₚalkyl (p = 0,1 or 2) and haloalkyl are also preferred.

Also preferred compounds are those in which a substituted phenyl ring, as defined in formula (Ia), is attached to a grouping:

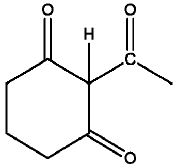

Preferred are such compounds in which the phenyl ring is substituted by two to three groups independently selected from halogen, alkyl, S(O)ₚalkyl (p = 0,1 or 2), -NO₂, -OR⁵, and haloalkyl, or two groups R² on adjacent carbon atoms of the phenyl ring may, together with the carbon atoms to which they are attached, combine to form a 6 membered saturated heterocyclic ring which is fused to the 2,3 or 3,4 positions of the benzoyl ring; wherein the heterocyclic ring contains a sulphur atom attached to the 4 position of the benzoyl ring, optionally in the form of a group -SO₂-, and which ring may be substituted by a 5- membered acetal thereof.

Most preferred are compounds in which the phenyl ring is substituted by two or three groups independently selected from a chloride atom, a nitro group, methylsulfonyl, trifluoromethyl, trifluoroethoxymethyl, (methoxyethoxy)methyl and ((tetrahydro-2-furanyl)methoxy)methyl.

The following compounds of formula (I) are among the most preferred for use in the present invention:
4-(4-chloro-2-methylsulphonylbenzoyl)-5-cyclopropylisoxazole (Isoxachlortole);
5-cyclopropyl-4-(2-methylsulphonyl-4-trifluoromethylbenzoyl)isoxazole (Isoxaflutole);
2-[2-chloro-(4-methylsulphonyl)benzoyl]-1,3-cyclohexanedione (Sulcotrione);
2-[2-nitro-(4-methylsulphonyl)benzoyl]-1,3-cyclohexanedione (Mesotrione);
2-(2,3-dihydro-5,8-dimethyl-1,1-dioxospiro[4H-1-benzothiin-4,2'-[1,3]dioxolan]-6- ylcarbonyl) cyclohexane-1,3-dione (Ketospiradox);
2-[2-chloro-4-(methylsulfonyl)-3-[(2,2,2-trifluoroethoxy)methyl]benzoyl]-1,3- cyclohexanedione (Tembotrione);
3-(2-chloro-4-mesylbenzoyl)-2-phenylthiobicyclo[3.2.1]oct-2-en-4-one (Benzobicyclon);
4-hydroxy-3-{2-[(2-methoxyethoxy)methyl]-6-(trifluoromethyl)-3-pyridylcarbonyl}bicyclo[3.2.1]oct-3-en-2-one (Bicyclopyrone) 2-[2-chloro-4-(methylsulfonyl)-3-[[(tetrahydro-2-furanyl)methoxy]methyl]benzoyl]-1,3-cyclohexanedione (Tefuryltrione); 2-cyano-1-[4-(methylsulphonyl)-2- trifluoromethylphenyl]-3-(1-methyl cyclopropyl)-propane-1,3-dione and
2-cyano-3-cyclopropyl-1-(2-methylsulphonyl-4-trifluoromethyl-phenyl)-propan-1,3-dione.
Compounds of the formula (I) are generally known, e.g. from patent publications EP 137963, EP 186118, WO 200021924, EP 527036, EP 946540, EP 496630, EP 496631, US 5525580 and US 7,378,375.

The herbicidal active compound of the formula (I) is preferably selected among substantially insoluble, or partially active ingredients, that is to say active compounds whose solubility in water is such that a significant solid content exists in the concentrate, e.g. at ambient temperatures. Accordingly, in a preferred embodiment of the present invention, aqueous suspension concentrates are provided comprising herbicidal active compound(s) of the formula (I) that are substantially insoluble, or partially soluble, in water at 20°C. The term "partially soluble" refers to a solubility of less than about 50 g/l, preferably less than about 30 g/l, and most preferably less than 20 g /l in water at 20°C.

Herbicidal active compounds of the formula (I) particularly useful in the compositions of the present invention include compounds selected from the group consisting of isoxazoles, triketones and diketonitriles, and the compounds benzobicyclon and ketospiradox, for example, sulcotrione, isoxaflutole, mesotrione, isoxachlortole, tembotrione, tefuryltrione. In a preferred embodiment the herbicidal active compound of formula (I) is selected among isoxazoles (e.g. isoxaflutole and isoxachlortole with isoxaflutole being especially prefered) and triketones (e.g. sulcotrione, mesotrione, tembotrione and tefuryltrione). Especially preferred are the triketones, in particular mesotrione.

The amount, by weight, of compound(s) of the formula (I) as active ingredient(s) present in the concentrated composition may be selected within a wide range. The choice of the amount of herbicidal active compound is generally a trade-off between the degree of stability desired and the desired concentration of the suspension concentrate. The amount of active compound(s) present in the concentrated composition is in general 600 g/l or less. Typically, the amount of active compound(s)present in the concentrated composition is 500 g/l or less, such as 300 g/l or less. Suitably the amount of active compound(s) present in the concentrated composition is 250 g/l or less, such as 200 g/l or less. To ensure a sufficient activity of the aqueous suspension concentrate, the amount of active compound(s) present in the concentrated composition is typically 1 g/l or above, such as 10 g/l or above. Suitably the active compound(s) is present in the concentrated composition in an amount of 25 g/l or above, such as 50 g/l or above, and typically 75 g/l or above.

Any smectite clay having the ability of stabilising the composition may be used in accordance with the present invention. Smectite clay is a family of naturally occurring clay minerals that includes montmorillonite, saponite, nontrite, hectorite, vermiculite and bentonite of which smectite, sodium montmorillonite, is the main constituent. Smectites are known as expanding clays due to their "two is to one" structure that consists of two tetrahedral sheets sandwiching a central octahedral sheet, forming stacks of plate-shaped microscopic particles. Montmorillonite is hydrated sodium calcium aluminum magnesium silicate hydroxide having the formula (Na,Ca)_{0.33}(Al,Mg)₂(Si₄O₁₀)(OH)₂·nH₂0. Suitably, the smectite is selected from the group consisting of montmorillonite, beidellite, sauconite, stevensite, hectorite, saponite, nontronite, vermiculite, and mixtures thereof. In one embodiment the smectite clay is montmorillonite.

Smectite clay's value as structuring agent is due to the colloidal structure in water. Each smectite particle is composed of a multitude of submicroscopic platelets stacked in sandwich fashion with a layer of water between each. A single platelet is about one nanometer thick and up to several hundred nanometers across. Once the clay is hydrated, the weakly positive platelet edges are attached to the negatively charged platelet faces. A three dimensional colloidal structure forms which accounts for the characteristic rhelogy imparted by these clays, i.e. an increase in viscosity. The colloidal structure has in the present invention shown to be of particularly value for its ability to trap and segregate solid particles of compounds of the formula (I) in aqueous suspension concentrates.

The amount of smectite in the aqueous suspension concentrate is generally not above 100 g/l. For most practical purposes, an amount of approximately 60 g/l or less of smectite clay is used to avoid a suspension with a viscosity, which is not desirable from an end-user point of view. Suitably, the amount of smectite is 50g/l or less, such as 30 g/l or less. To obtain a structuring effect even a small amount of smectite is suitable. In general, the amount of smectite is 0.5 g/l or above, such as 1 g/l or above and preferably 5 g/l and above.

Smectite clays are commercially available under various trade names including Van Gel B, Veegum, Veegum F, Veegum HV, VeegumK, Veegum HS, Veegum Ultra, Veegum D, Veegum Pure, Veegum Ultra, Veegum PRO, Veegum plus, Veegum T, Van Gel B, Van Gel C, Van Gel ES, Van Gel O, all trademarks of R.T. Vandebilt Company.

Smectite clay may also be provided synthetically e.g. following the method of Nakazawa, H., Yamada, H., and Fujita, T. (1992): Crystal synthesis of smectite applying very high pressure and temperature, Applied Clay Science, 6, 395-401.

The formulation further comprises as component c) one or more adjuvants, e.g. surface active agents, wetters, spreading agents and dispersing agents. Wetting agents or spreading agents increases the surface area covered by a given volume of a spray mixture. The adjuvant is in the present context defined as a component capable of enhancing the herbicidal activity of the compound(s) of formula (I) in the aqueous suspension concentrate.

Adjuvants are classified by function and chemistry. Both approaches have inherent difficulties because components are often claimed to have more than one function and complex mixtures of chemicals are rarely fully chemically disclosed. Some of the terms used for adjuvants in herbicide or pesticide products are crop oil concentrate, dispersant, surfactant, vegetable oil, modified seed oil, petroleum oil, spreader and sticker.

Typical surfactants used as adjuvants are non-aromatic-based surfactants, based for example on heterocycles, olefins, aliphatics or cycloaliphatics, examples being surface-active, mono- or poly-alkyl-substituted and subsequently derivatized, eg, alkoxylated, sulfated, sulfonated or phosphated, pyridine, pyrimidine, triazine, pyrrole, pyrrolidine, furan, thiophene, benzoxazole, benzothiazole, and triazole compounds, and/or aromatic-based adjuvants, examples being mono-, or poly-alkyl-substituted and subsequently derivatized, e.g., alkoxylated, sulfated, sulfonated or phosphated benzenes or phenols. Such surface active compounds are generally known and readily available on a commercial scale.

Surfactants from a broad range of chemical compounds may be employed. Depending on the herbicides to be formulated, suitable surfactant compounds are nonionic, cationic and/or anionic surfactants and adjuvant mixtures having good emulsifying, dispersing and wetting properties. Surfactants are, for example, non-aromatic-based surfactants, based for example on heterocycles, olefins, aliphatics or cycloaliphatics, examples being surface-active, mono- or poly-alkyl-substituted and subsequently derivatized, eg, alkoxylated, sulfated, sulfonated or phosphated, pyridine, pyrimidine, triazine, pyrrole, pyrrolidine, furan, thiophene, benzoxazole, benzothiazole, and triazole compounds, and/or aromatic-based surfactants, examples being mono-, or poly-alkyl-substituted and subsequently derivatized, eg, alkoxylated, sulfated, sulfonated or phosphated benzenes or phenols.

Examples of surfactants are listed below, wherein EO = ethylene oxide units, PO = propylene oxide units, and BO=butylene oxide units, and where the surfactants from group s1-s18 are non-aromatic based, whereas the s19-s21 surfactants are aromatic based:
s1) C10-C24 alcohols, which may be alkoxylated, with for example 1-60 alkylene oxide units, preferably 1-60 EO and/or 1-30 PO and/or 1-15 BO in any order. The terminal hydroxyl groups of these compounds may be endgroup-capped by an alkyl, cycloalkyl or acyl radical having 1-24 carbon atoms.
s2) Anionic derivatives of the products described under s1), in the form of ether carboxylates, sulfonates, sulfates, and phosphates, and their inorganic (eg, alkali metal and alkaline earth metal) and organic salts (eg, based on amine or alkanolamine).
s3) Fatty acid alkoxylates and triglyceride alkoxylates or alkoxylated vegetable oils such as soybean oil, rapeseed oil, corn germ oil, sunflower oil, cotton seed oil, linseed oil, coconut oil, palm oil, thistle oil, walnut oil, peanut oil, olive oil or castor oil, especially rapeseed oil, salts of aliphatic, cycloaliphatic, and olefinic carboxylic acids and polycarboxylic acids.
s4) Fatty acid amide alkoxylates; alkylene oxide adducts of alkynediols; sugar derivatives such as amino sugars and amido sugars, glucitols alkylpolyglycosides or such as sorbitan esters (eg ethoxylated sorbitan esters), cyclodextrin esters or ethers.
s5) Surface-active cellulose derivatives and algin derivatives, pectin derivatives and guar derivatives; polyol-based alkylene oxide adducts. Surface-active polyglycerides and their derivatives.
s6) Alkanesulfonates, paraffin sulfonates, and olefin sulfonates; sulfosuccinate-based surfactants, such as dialkylsuccinates.
s7) Alkylene oxide adducts of fatty amines, quaternary ammonium compounds having 8 to 22 carbon atoms
s8) Surface-active zwitterionic compounds such as taurides, betaines, and sulfobetaines
s9) Silicone-based and/or silane-based surface-active compounds.
s10) Perfluorinated or polyfluorinated surface-active compounds.
s11) Surface-active sulfonamides such as those from Bayer.
s12) Surface-active polyacrylic and polymethacrylic derivatives
s13) Surface-active polyamides such as modified gelatins or derivatized polyaspartic acid.
s14) Polyvinyl adjuvant-type compounds such as modified polyvinylpyrrolidone (eg alkylpolyvinylpyrrolidone such as C4-C20 alkyl polyvinylpyrrolidone) or the derivatized polyvinyl acetates or the polyvinyl butyrates or modified polyvinyl alcohols.
s15) Surface-active compounds based on maleic anhydride and/or reaction products of maleic anhydride, and also copolymers containing maleic anhydride and/or reaction products of maleic anhydride, such as the A
s16) Surface-active derivatives of montan waxes, polyethylene waxes, and polypropylene waxes.
s17) Surface-active phosphonates and phosphinates
s18) Polyhalogenated or perhalogenated surfactants.
s19) Phenols, which may have been alkoxylated, examples being phenyl C1-C4 alkyl ethers or (poly)alkoxylated phenols [i.e., phenol (poly) alkylene glycol ethers], having for example 1 to 50 alkyleneoxy units in the (poly)alkyleneoxy moiety, the alkylene moiety having preferably 1 to 4 carbon atoms in each case, preferably phenol reacted with 3 to 10 mol of alkylene oxide, (poly) alkylphenols or (poly) alkylphenol alkoxylates [i.e., polyalkylphenol (poly) alkylene glycol ethers], having for example 1 to 12 C atoms per alkyl radical and 1 to 150 alkyleneoxy units in the polyalkyleneoxy moiety, preferably triisobutylphenol or tri-n-butylphenol reacted with 1 to 50 mol of ethylene oxide, polyarylphenols or polyarylphenol alkoxylates [i.e., polyarylphenol (poly)alkylene glycol ethers], examples being tristyrylphenol polyalkylene glycol ethers having 1 to 50 alkyleneoxy units in the polyalkyleneoxy moiety, preferably tristyrylphenol reacted with 1 to 50 mol of ethylene oxide.
s20) Compounds which, formally, constitute the reaction products of the molecules described in s19) with sulfuric acid or phosphoric acid, and their salts neutralized with suitable bases, by way of example the acidic phosphoric ester of triply ethoxylated phenol, the acidic phosphoric ester of a nonylphenol reacted with 9 mol of ethylene oxide, and the triethanolamine-neutralized phosphoric ester of the reaction product of 20 mol of ethylene oxide and 1 mol of tristyrylphenol.
s21) Benzenesulfonates such as alkyl- or arylbenzenesulfonates, examples being (poly)alkylbenzenesulfonates and (poly)aryl-benzenesulfonates, both acidic and neutralized with suitable bases, having for example 1 to 12 carbon atoms per alkyl radical and/or having up to 3 styrene units in the polyaryl radical, preferably (linear) dodecylbenzenesulfonic acid and its oil-soluble salts such as the calcium salt or the isopropylammonium salt of dodecylbenzene-sulfonic acid.
s22) Copolymers composed of EO, PO and/or BO units such as, for example, block copolymers having a molecular weight of 400 to 10⁸.
s23) Alkylene oxide adducts of C1-C9 alcohols.

The specific choice and amount of adjuvant(s) depends on the particular active ingredient(s) and smectite clay selected for the composition and the desired absolute and relative amounts of the individual components. Suitable amounts of anti-settling system components selected from the generic classes or specific examples provided herein can be determined by routine experimentation, the test being that essentially no or only an insignificant phase separation, sedimentation or flocculation is exhibited by the composition following storage at 20-25 °C or higher, e.g. 40°C or 54°C for a period of 24 hours, or, for preferred embodiments, following a longer period of storage over a broader range of temperatures as indicated above.

The stability index may be used as an indication for the anti-settling properties. The stability index is recorded as % phase separation by dividing the height of the cellar layer with the total height of the formulation and multiplying with 100. In an embodiment of the present invention the individual components are selected to provide for an aqueous suspension concentrate which, after having been exposed to 54°C for 14 days, exhibits a stability index around 30 or lower, preferably of 20% or lower, suitably 15 % or lower, or more preferably 10% or lower.

Typically the total concentration of all adjuvants in the composition is 800 g/l or less, for example 1 to 800 g/l, excluding the weight of counter ions, if present. To obtain a sufficient support for the smectite clay the amount is suitably higher than 300 g/l (e.g. between 300 - 800 g/l), preferably higher than 350 g/l (e.g. between 350-800 g/l), more preferably between 350 to 700 g/l and most preferably between 400 to 600 g/l. It is well known that higher amounts of adjuvants often tend to increase the activity of agrochemical active ingredients. A high amount of adjuvant is however normally on the expense of having to lower the amount of active ingredient and/or the amount of water, and very high amounts of adjuvant may not necessarily provide the desired stability of the concentrate. Furthermore, if the formulation becomes too viscous then it will be difficult to handle. It is preferred that the amount of water as a minimum constitutes 5% of the concentrated suspension concentrate.

In a preferred embodiment of the present invention, the surface active ingredient, if present as adjuvant, is chosen among nonionic surfactants. A preferred nonionic type of surfactant class is sorbitan esters optionally ethoxylated derivatives thereof. Most preferably the surfactant(s) is chosen among ethoxylated sorbitan derivatices, such as one or more from the Tween series of surfactants available from Croda, e.g. Tween 20.

Preferably, as an optional component d), thickeners are included in the suspension concentrate composition to provide gravitational stabilization by increasing viscosity. One or more thickener compounds is normally not required in the prior art formulations, but have been found to add positively to the overall stability. Useful thickeners include chemical compounds and polymeric materials that will be known to and understood by the skilled artisan, and include generally natural and synthetic starches, gums, and other types of chemical compounds that will increase the viscosity of a solution. Thickening agents are well known in the chemical and polymer arts, and include inter alia, polyacrylamides, polysaccharids (xanthan gums), cellulosic resins and functionalized cellulosic resins, polyacrylic acids, polyethylene oxides, and the like. Further, sodium carboxymethyl cellulose, guar gum, gum arabic, sodium alginate, polyvinyl alcohol, and the like, may also be used. Commercially available examples include Kelzan and Rhodapol 23: xanthan gums, Carbopol 910 and Carbopol 981: polyacrylic acid polymer (a carboxy vinyl polymer), and Kelcosol: sodium alginate. The amount of thickener is between 0 and 50 g/l, preferably 0.1 - 50 g/l depending on the desired viscosity of the composition. Preferably the amount is between 0.1 - 40 g/l and more preferably between 0.5-30 g/l, even more preferably between 1-25 g/l and most preferably between 1.5 and 20 g/l. The thickener is preferably so selected as to enhance the stabilizing effect of the smectite clay, i.e. to create a suspending system with the smectite clay that will ensure prolonged stability of the active compound(s) of formula (I) in itself by preventing the concentrated composition from becoming unstable upon long term storage, especially under warm storage conditions.

In a preferred embodiment the thickener is selected among xanthan gums and carboxy vinyl polymers (straight, branched or crosslinked, eg with polyalkenyl ethers or divinyl glycol). Such carboxy vinyl polymers, useful in the compositions of the present invention, have an average molecular weight between about 500,000 and 6 million. The polymers are characterized by having carboxylic acid functional groups and preferably contain between 2 and 7 carbon atoms per functional group. Suitable carboxy vinyl polymers include those socalled carbomers, e.g. as sold under the tradename Carbopol (Lubrizol Corp., Cleveland, Ohio). Specifically preferred are: carbomer 910, carbomer 940, carbomer 934, carbomer 934P, carbomer 971P, carbomer 974P, carbomer 981 and carbomer 1342. Carbopol 981 is among those being especially preferred. Such polymers will typically be employed in an amount between 0.5 and 50.0 g/l, depending on the desired viscosity of the composition. It is preferred to use the xanthan gums and/or carboxy vinyl polymers at a concentration between 0.1 and 40 g/l, more preferably between 0.5 and 30 g/l, even more preferably between 1-25 g/l and most preferably at a concentration of between 1.5 and 20 g/l. Such thickener may be used in combination with other thickeners as mentioned before.

Other structuring agents that may be used in combination with the smectite clay include e.g. as kaolin (china clay), synthetic and diatomaceous silicas, calcium and magnesium silicates (e.g. attapulgite), titanium dioxide, aluminium, calcium or magnesium carbonate, ammonium, sodium, potassium, calcium or barium sulphate, charcoal, starch, including modified starches such as alkyl and carboxyalkyl starches, cellulose, such as microcrystalline cellulose, and cellulose derivatives such as carboxyalkyl cellulose, and mixtures thereof.

Some structuring agents may also serve the purpose as thickeners.

Further optionally inert formulation auxiliaries, which may be included in the liquid concentrated formulations as described herein, are, as optional component e), preferably selected among, but not limited to, pH adjusters, antifreeze agents, preservatives, antifoaming agents, co-herbicides, UV protectants, and co-solvents. Such auxiliaries are generally known within the art of formulation chemistry, and although a specific ingredient is classified as falling within one category - including the adjuvants, it may well serve the purpose of any of the others. The amount of further inert formulation auxiliaries, component e) is preferably between 0-500 g/l and more preferably between 1-500 g/l, and most preferably between 5-400 g/l.

A variety of different pH adjusters can be useful with the herbicide compositions of the invention. The pH adjuster may be any of a variety of suitable organic or inorganic acids, of any useful strength or concentration that can be added to a suspension concentrate or a derivative thereof, preferably without causing substantial or undue negative effects such as reaction with an ingredient of the suspension concentrate, precipitation, etc. It will be understood that an pH adjuster can be in a concentrated or diluted form, as necessary or desirable. Non-limiting examples of pH adjusters include acids such as sulfuric acid, phosphoric acid, hydrochloric acid, nitric acid, acetic acid perchloric acid, polyphosphoric acid. These and other pH adjusters can be used alone or in combination. Depending on choice of active ingredient, preferred amounts will be sufficient to produce suspension concentrate composition having a pH below 4.5 or otherwise around or below the pKa of the herbicide of formula (I) when appropriate to refer to such parameter. If more than one herbicide of the formula (I) is present, the pH is advantageously set around or below the lowest pKa of such compounds. It is preferred to keep the suspension concentrate at low pH when the active compound(s) of formula (I) advantageously is kept at low solubility conditions in water if the active compound(s) has a tendency to chemically degrade over time in aqueous environment, i.e. when the active compound(s)solubility is pH dependent as is the case with e.g. triketones (such as sulcotrione, mesotrione and tembotrione) that has a reduced solubility at low pH values. However, one need not necessarily add pH adjusters as the suspension by itself may already have a pH value that is within the preferred range depending on choice of components comprised in the suspension including any optionally auxiliaries.

Examples of the antifreezing agent include ethylene glycol, diethylene glycol, propylene glycol and the like.

Typical preservatives include methyl and propyl parahydroxybenzoate, 2-bromo-2-nitro-propane-1,3-diol, sodium benzoate, formaldehyde, glutaraldehyde, O-phenylphenol, benzisothiazolinones, 5-chloro-2-methyl-4-isothiazolin-3-one, pentachlorophenol, 2-4-dichlorobenzylalcohol and sorbic acid and derivatives thereof.

Preferred antifoam agents are siloxan derivatives or perfluoroalkylphosphonic/perfluoroalkylphosphinc acids, in particular polydimethylsiloxanes, such as Rhodorsil 416 or Rhodosil 454 from Rhodia or mixtures comprising perfluoro-(C₆₋₁₈)-alkylphosphonic acids and perfluoro-(C₆₋₁₈)-alkylphosphinic acids, such as Fluowet PL80, Fluowet PP from Clariant. Also preferred are the silicone based products Silcolapse, eg Silcolapse 430 or Silcolapse 5020 available from Rhodia.

The compositions of the present invention may also contain one or more co-herbicides different from the compound(s) of formula (I) already present in the suspension concentrate. Co-herbicides suitable for use in the present invention include acetyl-CoA carboxylase inhibitors (ACC), for example cyclohexenone oxime ethers, such as alloxydim, clethodim, cloproxydim, cycloxydim, sethoxydim, tralkoxydim, butroxydim, clefoxydim or tepraloxydim; phenoxyphenoxypropionic esters, such as clodinafop-propargyl, cyhalofopbutyl, diclofop-methyl, fenoxaprop-ethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl; arylaminopropionic acids, such as flamprop-methyl or flamprop-isopropyl; acetolactate synthase inhibitors (ALS), for example imidazolinones, such as imazapyr, imazaquin, imazamethabenz-methyl (imazame), imazamox, imazapic or imazethapyr; pyrimidyl ethers, such as pyrithiobac-acid, pyrithiobac-sodium, bispyribac-sodium or pyribenzoxym; sulfonamides, such as cloransulam, diclo-sulam, florasulam, flumetsulam, metosulam or penoxsulam; or sulfonylureas, such as amidosulfuron, azimsulfuron, bensulfuron-methyl, chlorimuronethyl, chlorsulfuron, cinosulfuron, cyclosulfamuron, ethametsulfuron-methyl, ethoxysulfuron, flazasulfuron, foramsulfuron, halosulfuron-methyl, imazosulfuron, io-dosulfuron, metsulfuron-methyl, nicosulfuron, primisulfuron-methyl, prosulfu-ron, pyrazosulfuronethyl, rimsulfuron, sulfometuron-methyl or -3-oxetanyl, sulfosulfuron, thifensulfuron-methyl, triasulfuron, tribenuron-methyl, triflusulfuron-methyl or tritosulfuron;amides, for example allidochlor, benzoylprop-ethyl, bromobutide, chlorthiamid, diphenamid, etobenzanid (benzchlomet), fluthiamide, fosamin or monalide;
auxin herbicides, for example pyridinecarboxylic acids, such as clopyralid or picloram; 2,4-D or benazolin;
auxin transport inhibitors, for example naptalame or diflufenzopyr; carotenoid biosynthesis inhibitors, for example amitrol, diflufenican, fluorochlo-ridone, fluridone, flurtamone, norflurazon or picolinafen; enolpyruvylshikimate-3-phosphate synthase inhibitors (EPSPS), for example glyphosate or sulfosate; glutamine synthetase inhibitors, for example bilanafos (bialaphos) or glufosinate-ammonium;
hydroxyphenyl pyruvate dioxygenase inhibitors (HPPD) such as pyrazoles for example pyrazolynate, pyrazoxyfen, pyrasulfotole, benzofenap, bicyclopyrone and topramezone;
lipid biosynthesis inhibitors, for example anilides, such as anilofos or mefenacet; chloroacetanilides, such as dimethenamid, S-dimethenamid, acetochlor, alachlor, butachlor, butenachlor, diethatyl-ethyl, dimethachlor, metazachlor, metolachlor, S-metolachlor, pethoxamid, pretilachlor, propachlor, prynachlor, terbuchlor, thenylchlor or xylachlor; thioureas, such as butylate, cycloate, di-allate, dimepiperate, EPTC, esprocarb, molinate, pebulate, prosulfocarb, thiobencarb (benthiocarb), tri-allate or vernolate; or benfuresate or perfluidone;
mitosis inhibitors, for example carbamates, such as asulam, carbetamid, chlor-propham, orbencarb, propyzamid, propham or tiocarbazil; dinitroanilines, such as benefin, butralin, dinitramin, ethalfluralin, fluchloralin, oryzalin, pendi-methalin, prodiamine or trifluralin; pyridines, such as dithiopyr or thiazopyr; or butamifos, chlorthal-dimethyl (DCPA) or maleic hydrazide;
protoporphyrinogen IX oxidase inhibitors, for example diphenyl ethers, such as acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen; oxadiazoles, such as oxadiargyl or oxadiazon; cyclic imides, such as azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or pyrazoles, such as ET-751, JV 485 or nipyraclofen;
photosynthesis inhibitors, for example propanil, pyridate or pyridafol; benzothiadiazinones, such as bentazone; dinitrophenols, for example bromofenoxim, dinoseb, dinoseb-acetate, dinoterb or DNOC; dipyridylenes, such as cyperquat-chloride, difenzoquat-methylsulfate, diquat or paraquat-dichloride; ureas, such as chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron; phenols, such as bromoxynil or ioxynil; chloridazon; triazines, such as ametryn, atrazine, cyanazine, desmetryn, dimethamethryn, hexazinone, prometon, prometryn, propazine, simazine, simetryn, terbumeton, terbutryn, terbutylazine or trietazine; triazinones, such as metamitron or metribuzin; uracils, such as bromacil, lenacil or terbacil; or biscarbamates, such as desmedipham or phenmedipham;
growth substances, for example aryloxyalkanoic acids, such as 2,4-DB, clome-prop, dichlorprop, dichlorprop-P (2,4-DP-P), fluoroxypyr, MCPA, MCPB, mecoprop, mecoprop-P or triclopyr; benzoic acids, such as chloramben or dicamba; or quinolinecarboxylic acids, such as quinclorac or quinmerac;
cell wall synthesis inhibitors, for example isoxaben or dichlobenil;
various other herbicides, for example dichloropropionic acids, such as dalapon; dihydrobenzofurans, such as ethofumesate; henylacetic acids, such as chlorfenac (fenac); or aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid or trimeturon; or their environmentally compatible salts, "acids", esters and amides.
Preferred co-herbicides include nicosulfuron, glyphosate, glufosinate, aclonifen, flufenacet, chloroacetanilides such as dimethenamid, S-dimethenamid, acetochlor, alachlor, butachlor, butenachlor, diethatyl-ethyl, dimethachlor, metazachlor, pethoxamid, metolachlor, S-metolachlor, pretilachlor, propachlor and triazines such as ametryn, atrazine, cyanazine, desmetryn, dimethamethryn, hexazinone, prometon, prometryn, propazine, simazine, simetryn, terbumeton, terbutryn, terbutylazine or trietazine.

In addition to the compound(s) of formula (I) and optionally at least one compound from amongst the co-herbicides set forth above, the compositions according to the invention may also contain at least one herbicide safener, e.g to prevent damage to the crop plant caused by the herbicide(s) applied, including the compound(s) of formula (I) and/or co-herbicide. Suitable safeners include benoxacor, cloquintocet, dichlormid, fenclorim, flurazole, fluxofenim, furilazole, isoxadifen, mefenpyr and the agriculturally accepted salts and esters thereof, such as cloquintocet-mexyl, isoxadifen-ethyl and mefenpyr-diethyl.

The abovementioned co-herbicides and safeners are described and characterized in "The Pesticide Manual", Twelfth Edition, 2000, Crop Protection Publications or newer editions or in other customary agronomical publications.

The compositions can also contain other compatible components, for example, plant growth regulators, fungicides, insecticides, and fertilizers.

The particle size of the solid particles in the composition is preferably of an average particle size, as determined by Dv50, of less than 20 micron, preferably an average particle size between 20-0.1 micron, more preferably 10-0.5 micron and most preferably an average particle size between 5-1 micron. Dv50 is the median particle size based on a volumetric particle size distribution, in other words the particle size below which 50% of the particle population lies and is determined using available analytical devices such as Malvern Mastersizer.

To summarize, there are provided embodiments of aqueous suspension concentrate compositions comprising a mixture of water and
a) at least one compound of formula (I);
b) a structuring agent selected among smectite clays;
c) one or more adjuvants;
d) optionally one or more thickening agents;
e) optionally one or more customary inert formulation auxiliaries;
or in terms of preferred embodiments:

Aqueous suspension concentrate compositions comprising
a) 1-600 g/l of at least one compound of formula (I);
b) 1-100 g/l of a structuring agent selected among smectite clays;
c) 1-800 g/l of one or more adjuvants;
d) 0-50 g/l of one or more thickening agents;
e) 0-500 g/l of one or more customary inert formulation auxiliaries;
and water to 1 liter.

Further preferred embodiments are as herein described previously.

In another aspect of the present invention, there is also provided a method of preparing an aqueous suspension concentrate compositions as described herein. The suspension concentrates are generally produced by a three step process comprising of
- Pre-mixing,
- Wet milling, and
- Post-blending.

### Pre-mixing:

A fine, preferably homogenous slurry of the herbicide(s) of formula (I) is prepared in water that may include some or all of the adjuvants and optionally other customary inert formulation auxiliaries. High speed mixing is preferably used for this purpose. If excessive foaming in this step is observed/expected, depending of choice of auxiliaries, an antifoaming agent is advantageously added, as an undesired high level of air bubbles as dispersion may cause serious problems during milling, as well as to the stability of suspension.

### Wet Milling:

The above slurry may then be wet milled using a proper wet grinding mill for achieving the desired particle size range. In these mills the slurry along with grinding media (pearls of about 1 mm diameter made of steel or glasses) is stirred with a high speed rotating shaft fitted with rotating disc in a water cooled stationary cylinder. The mill can be vertically or horizontally designed. The process can be continuous or batchwise. Closed systems are preferably used to avoid entrapping of air. This step may include addition of any of the optional customary inert formulation auxiliaries.

### Post-blending:

If the optional thickening agent is present, the milled slurry is finally blended in a low shear mixer with the solution of thickening agent, which is not generally added during the premixing or wet milling to avoid shear degradation. The post blending, which is usually carried out as a batch process, also ensures the homogeneity of the formulation batch. Again, this step may include addition of the adjuvants (eg surface active ingredients, wetters and dispersing agents), in total or in part, and other customary inert formulation auxiliaries.

The structuring agent selected among smectite clays may be added at any stage in the above outlined process, but is preferably added after the milling, i.e. during the post-blending step as to finalize the composition. Some structuring agents must be hydrated to provide the desired properties. Hydration is often done as pre-mix according to producers recommendations. The optional thickening agent may also be added at any stage, but usually is added at the same as the structuring agent - order of addition of the two is not important, however, the structuring agent is often added before the thickening agent to avoid difficult homogenization due to high viscosity.

In a preferred embodiment some of the surface active ingredient(s) as well as dispersion agents are added to the water phase prior to milling, i.e. in the initial pre-mixing phase. Regulation of pH may take place at any stage but conveniently takes place during the post-blending step and most advantageously, regulation of pH is often the absolute final step, as some formulation ingredients added after addition of dedicated pH regulators may alter the pH.

The present invention is further directed to a method of controlling undesired plant growth (e.g. weeds) in the presence of cultivated plants, which comprises treating the cultivated plants, plant parts, seed or the locus thereof with a herbicidally effective amount of a aqueous suspension concentrate composition as described herein. While concentrated formulations are preferred as commercially available goods, the end consumer uses, as a rule, dilute formulations. These formulations may be diluted to concentrations down to between 0.0001 and 5% of active ingredient (a.i.) by weight of total solution. In general the a.i. concentrations are between 0.001 and 3% by weight, preferably 0.005 to 2% by weight. An effective amount is any amount that has the ability to combat the harmful and/or undesired plants.

The composition of the invention may be used against a large number of agronomically important weeds, including, but not limited to, monocotyledonous weeds such as Agrostis spp., Digitaria spp. (eg D. ischaemum, D. sanguinalis), Avena spp., Setaria spp., Lolium spp., Echinochloa spp., Eleusine spp. (eg Eleusine indica), Scirpus spp., Monochoria spp., Sagittaria spp., Bromus spp., Alopecurus spp., Sorghum halepense, Rottboellia spp., Cyperus spp. (eg Cyperus esculentus) and dicotyledonous weeds such as Stellaria spp., Nasturtium spp., Sinapis spp., Solarium spp., Phaseolus spp., Taraxacum spp. (eg Taraxacum officinale), Trifolium spp. (eg Trifolium repens), Abutilon spp., Sida spp., Xanthium spp., Amaranthus spp., Chenopodium spp., Ipomoea spp., Chrysanthemum spp., Galium spp., Viola spp. and Veronica spp..

More specifically among the weeds, which may be controlled by the composition of the invention, there may be mentioned monocotyledonous weeds such as grasses (e.g. large and smooth crabgrass, bent grass) and dicotyledonous weeds such as dandelion, white and red clover, chickweed, henbit, corn speedwell, oxalis, buckhorn and broadleaf plantain, dollar weed, lambsquarters, knotweed, ragweed, wild violets, pigweed and hedge weed. In a particular embodiment, the compositions of the invention may be used to control monocotyledonous weeds such as grasses

The term 'weeds' includes undesirable crop species such as volunteer crops. For example in the context of turf grass crops such as on a golf course, creeping bentgrass putting green turf can be considered a 'volunteer' if found in a fairway section, where a different variety of grass is being cultivated. The other grasses listed below can, similarly, be considered weeds, when found in the wrong place.

The 'locus' is intended to include soil, seeds, and seedlings as well as established vegetation.

The benefits of the present invention are seen most when the pesticidal composition is applied to kill weeds in growing crops of useful plants: such as maize (corn) including field corn, pop corn and sweet corn; cotton, wheat, rice, oats, potato sugarbeet, plantation crops (such as bananas, fruit trees, rubber trees, tree nurseries), vines, asparagus, bushberries (such as blueberries), cranberries, cranberries, flax, grain sorghum, okra, peppermint, rhubarb, spearmint and sugarcane.

In addition 'crops' are to be understood to include those crops that have been made tolerant to pests and pesticides, including herbicides or classes of herbicides (and, suitably, the herbicides of the present invention), as a result of conventional methods of breeding or genetic engineering. Tolerance to herbicides means a reduced susceptibility to damage, caused by a particular herbicide compared to conventional crop breeds. Crops can be modified or bred so to be tolerant, for example to the herbicidal active compounds of the formula (I).

Suitably the composition of the present invention is useful in controlling the growth of undesirable vegetation by pre-emergence or post-emergence application to the locus, where control is desired, depending on the crop over which the combination is applied. In one embodiment the herbicidal composition of the invention is applied as a pre-emergent application.

In other embodiments, the invention includes storage and shipping systems. Typical storage and shipping systems comprise a container ranging in capacity from about 0.1 L to about 200 L and a compatibilized aqueous pesticidal composition as described herein located in the container. Typically the formulation will be concentrated. The container may include the standard 2.5 gallon (9.46 L) containers widely used in the United States, which typically take the form of jugs or flasks with a replaceable screw-cap. These containers are generally designed for single use and are typically not returned to the supplier when empty, instead being disposed of by the end user in accordance with local agricultural chemical container disposal guidelines, procedures, regulations or laws. Commonly, a plurality of these small containers are packaged within a single box and a plurality of such boxes are shipped on a pallet. During shipment, the small containers (usually within boxes on pallets) can be disposed in an enclosed volume such as provided by a rail boxcar or road truck, the hold of a ship or aircraft, or a modular box container adapted for transport by road, rail and water. Larger single-use containers, ranging in capacity up to about 200 L, for example about 50 L to about 200 L, are commonly in the form of drums, and can be shipped in an enclosed volume as described above, one or more per pallet or unpalleted. Formulations of the invention also can be distributed in a large refillable container sometimes known as a bulk or minibulk tank, which typically has an integral pump or connector for an external pump to permit transfer of liquid. Bulk or minibulk tanks having a capacity of about 200 to about 2000 liters or more are typically returned to the supplier when empty and are commonly shipped on a pallet.

### Examples

The invention is illustrated by the following examples in which all parts and percentages are by weight unless otherwise stated.

The description of the products used in the Examples is as follows:

**Table 1**

| Name | Description | Manufacturer |
|---|---|---|
| Tween 20 | Ethoxylated (20)-sorbitan monolaurate | Croda |
| Rhodasurf DA630E | Ethoxylated (6)-isodecyl alcohol | Rhodia |
| Atlox LP1 | Polycondensed fatty acid | Croda |
| Atlox 4913 | Acrylic copolymer solution | Croda |
| Rhodopol 23 | Xanthan gum | Rhodia |
| Carbopol 981 | Carbomer, Carboxyvinyl polymer | Lubrizol |
| Atlox 4894 | Ethoxylated fatty alcohol | Croda |
| Proxel BD20 | Biocide, 1,2-benzisothiazolin-3-one | Arch Chemicals |
| Agrimer AL-22 | Alkylated polyvinylpyrrolidone | ISP |
| Silcolapse 430 | Silicone based antifoam | Rhodia |
| Van Gel B | Magnesium Aluminum Silicate (Smectite Clay) | Vanderbilt Cy. |
| Aerosil 300 | Hydrophilic fumed silica (CAS 7631-86-9) | Degussa |
| Pluronic PE 10500 | Polyethylene/polypropylene oxide block copolymer | BASF |

### Example I - comparative

A suspension concentrate was prepared according to example 3 of International patent publication no. WO 02/063956:

The adjuvant (490.5 g/l TWEEN) and the viscosity modifying agent (54.5 g/l octan-1-ol) was weighed into a vessel and homogenised. The dispersing agent for mesotrione (16.4 g/l PLURONIC PE10500) is conveniently warmed to its melting point (typically 35°C to 60°C) and added in the molten state while stirring. The alkylpolyvinylpyrrolidone (16.4 g/l Agrimer AL-22), and 218 g/l RHODASURF DA630E were then added and mixing was continued until a homogeneous product was obtained. The water (up to 1 l) was then added and mixed in together with the antifoam (1 g/l Antifoam MSA).

Mesotrione (100 g/l) as a technical wet paste was added and a higher mixing speed was initiated and continued until homogenous suspension was obtained. Fumed silica (32.7 g/l AEROSIL) was then weighed into the vessel, wetted into the formulation using moderate speed on the mixer and then mixing was completed using a higher speed. A homogeneous, smooth, mobile and viscous liquid was produced. This premix was milled using an "Eiger" mini motor mill to achieve a particle size of 100% less than 50µm and greater than 70% less than 5µm as measured using a "Malvern" Mastersizer S.

The resulting millbase was adjusted to pH 2.2 to 2.4 at 20°C using 24.5 g/l orthophosphoric acid (85.5% w/w) and the suspension concentrate was mixed for approximately 5 minutes, using a paddle stirrer to achieve effective mixing. The stability of the composition was evaluated as described below.

Compositions prepared using the above general method are given in Table 1.

### Example 2-4

Suspension concentrates of mesotrione in Examples 2-4 were prepared by the following method: The balance of demineralised water and propylene glycol were charged to the mixing vessel and stirring was initiated. Silcolapse 430 was added followed by Atlox LP1, which was warmed up to its pouring point of aprox. 50°C. Tween 20 was then added and the stirring was continued. Mesotrione was slowly added last and the stirring speed was increased to avoid formation of lumps. The stirring speed was however maintained at a level at which excessive amount of air was not trapped into the pre-mix. Stirring was continued until the pre-mix became homogenized.

The pre-mix was milled using WAB Dyno-Mill Multilab (a bead mill) to achieve a particle size of Dv50 less than 5µm, measured by using Malvern Mastersizer. A particle size of Dv50 around 2µm was achieved.

In the post-blending step the rest of the formulation ingredients were added, including the pre-hydrated suspension agents such as smectite clay (Van Gel B) and Carbopol 981. Final step included the adjustment of the pH. Phosphoric acid (85%) was used to adjust the pH to 2.8 - 3.2 at 20 °C. Suspension concentrate was then further stirred 30 minutes to achieve homogeneity.

### Example 5 - comparative

A suspension concentrate prepared as outlined above was prepared, but omitting the smectite clay.

Compositions prepared according to examples 1 to 5 are given in table 2 below. Concentrations are in g/l

**Table 2**

| Ingredients | 1 Comparative | 2 | 3 | 4 | 5 Comparative |
|---|---|---|---|---|---|
| Mesotrione | 100 | 100 | 100 | 100 | 100 |
| Tween 20 | 490.5 | 480 | 480 | 480 | 480 |
| Rhodasurf DA630E | 218 | - | - | - | - |
| Atlox LP1 | | 30 | 30 | 30 | 30 |
| Pluronic PE 10500 | 16.4 | - | - | - | - |
| Atlox 4913 | - | 20 | 20 | 20 | 20 |
| Van Gel B | - | 10 | 10 | 10 | - |
| Carbopol 981 | - | - | 2 | - | - |
| Rhodapol 23 | - | - | - | 3 | - |
| Agrimer AL-22 | 16.4 | - | - | | - |
| Aerosil 300 | 32.7 | - | - | | - |
| Octanol | 54.5 | - | - | - | - |
| Phosphoric acid | 24.5 | q.s | q.s | q. s. | q.s |
| Silcolapse 430 | 1 | 1 | 1 | 1 | 1 |
| Propylene Glycol | | 40 | 40 | 40 | 40 |
| Potassium Sorbate | | 1 | 1 | 1 | 1 |
| Water | to 1L | to 1L | to 1L | To 1L | to 1L |

The stability of each formulation was measured in an accelerated test, which often is carried out at elevated temperatures to extrapolate shelf life of a product. In this case standard accelerated test method was employed. Samples were stored at 54°C for 2 weeks. It is noted that 54°C for 2 weeks often simulates a shelf life of 2 years.

Phase separation - often in form of clear layer - is an indication of instability and is measured. The stability index was recorded as % phase separation, which is height of the cellar layer divided by the total height of the formulation, multiplied by 100. Therefore a low stability index value indicates a stable formulation, whereas, conversely a high stability index value indicates a low stability formulation.

Results are given in Table 3 below.

**Table 3**

| Stability Index for 2 weeks storage test at 54 °C. | | | | | |
|---|---|---|---|---|---|
| Example No | 1 | 2 | 3 | 4 | 5 |
| Stability Index | 30 | 8 | 5 | 7 | 50 |

As can be seen from the table, compositions according to the comparative Example 5, which does not contain a smectite clay or a thickening agent, results in a unacceptably high stability index. i.e. poor stability. Comparative example 1, wherein use is made of a suspending system comprising silica and alkylpolyvinylpyrrolidon, does not give satisfactory stability upon storage at elevated temperatures. By substituting, in example 2, the fumed silica used in example 1 as structuring agent with smectite (Van Gel B) the value of the stability index is improved by a factor four. Addition of a thickening agent, i.e. carboxyvinyl polymer or xanthan gum as in example 3 and 4 respectively, further improves the stability in comparison with example 2.

### Examples 6-8

**Table 4**

| Ingredients | 6 Comparative | 7 | 8 |
|---|---|---|---|
| Sulcotrione | 100 | 100 | 100 |
| Tween 20 | 500 | 500 | 500 |
| Atlox 4894 | 50 | 50 | 50 |
| Atlox LP1 | 30 | 30 | 30 |
| Atlox 4913 | 20 | 20 | 20 |
| Van Gel B | - | 10 | 10 |
| Rhodopol 23 | - | - | 1 |
| Proxel BD20 | 0,28 | 0,28 | 0,28 |
| Silcolapse 430 | 1 | 1 | 1 |
| Water | to 1L | to 1L | to 1L |

Different suspension concentrates of sulcotrione were prepared according to Table 4 by the following method: The balance of demineralised water charged to the mixing vessel and stirring was initiated. Silcolapse 430 was added followed by Atlox LP1, which was warmed up to its pouring point of aprox. 50°C. Tween 20 was then added and the stirring was continued. Sulcotrione was slowly added last and the stirring speed was increased to avoid formation of lumps. The stirring speed was however maintained at a level at which excessive amount of air was not trapped into the pre-mix. Stirring was continued until the pre-mix became homogenized.

The pre-mix was milled using WAB Dyno-Mill Multilab (a bead mill) to achieve a particle size of Dv50 less than 5µm, measurehd by using Malvern Mastersizer. A particle size of Dv50 around 2µm was achieved.

In the post-blending step the rest of the formulation ingredients were added, including the pre-hydrated structuring and thickening agent. Suspension concentrate was then further stirred 30 minutes to achieve homogeneity.

**Table 5**

| Stability Index for 2 weeks storage test at 54 °C. | | | |
|---|---|---|---|
| Example No | 6 | 7 | 8 |
| Stability Index | 40 | 20 | <1 |

As can be seen from the table, composition according to the comparative example 6, which does not contain suspension agents, results in a unacceptably high stability index. i.e. poor stability. Addition of the structuring agent (Van Gel B), the value of the stability index is improved. Further addition of a thickening agent, xanthan gum, improved the stability index to the point of almost no phase separation/bleeding.

### Examples 9-11

**Table 6**

| Ingredients | 9 Comparative | 10 | 11 |
|---|---|---|---|
| Isoxaflutole | 100 | 100 | 100 |
| Tween 20 | 400 | 400 | 400 |
| Rhodasurf DA630E | 75 | 75 | 75 |
| Atlox LP1 | 10 | 10 | 10 |
| Atlox 4913 | 10 | 10 | 10 |
| Van Gel B | - | 10 | 10 |
| Rhodopol 23 | - | - | 1 |
| Octanol | 10 | 10 | 10 |
| Phosphoric acid | q.s | q.s | q.s |
| Silcolapse 430 | 1 | 1 | 1 |
| Propylene Glycol | 40 | 40 | 40 |
| Water | to 1 L | to 1 L | to 1 L |

Suspension concentrates of isoxaflutole in examples 9-11 were prepared by the following method: The balance of demineralised water and propylene glycol charged to the mixing vessel and stirring was initiated. Silcolapse 430 was added followed by Atlox LP1, which was warmed up to its pouring point of aprox. 50°C. Tween 20 was then added and the stirring was continued. Isoxaflutole was slowly added last and the stirring speed was increased to avoid formation of lumps. The stirring speed was however maintained at a level at which excessive amount of air was not trapped into the pre-mix. Stirring was continued until the pre-mix became homogenized.

The pre-mix was milled using WAB Dyno-Mill Multilab (a bead mill).
In the post-blending step the rest of the formulation ingredients were added, including the pre-hydrated smectite clay (Van Gel B) and xanthan gum (Rhodopol 23). The final step included the adjustment of the pH. Phosphoric acid (85%) was used to adjust the pH to 4 at 20 °C. The suspension concentrate was then further stirred 30 minutes to achieve homogeneity.

Stability Index for 2 weeks storage test at 54 °C.

| | | | |
|---|---|---|---|
| Example No | 9 | 10 | 11 |
| Stability Index | 80 | 23 | 20 |

As can be seen from the table, the composition according to the comparative Example 9, which does not contain smectite and thickening agent, results in an unacceptably high stability index. i.e. poor stability. By addition of smectite (Van Gel B), the value of the stability index is enhanced. Addition of xanthan gum appears to improve the stability further.

## Claims

1. An aqueous suspension concentrate (SC) composition comprising
a) at least one compound of the formula (I), 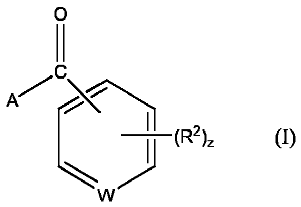 wherein :
A is a group selected from (A-1) to (A-4) 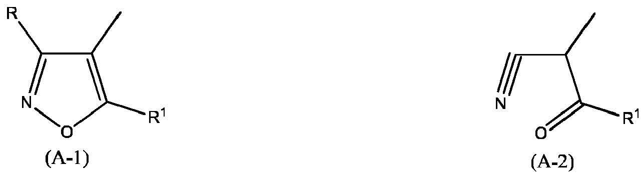 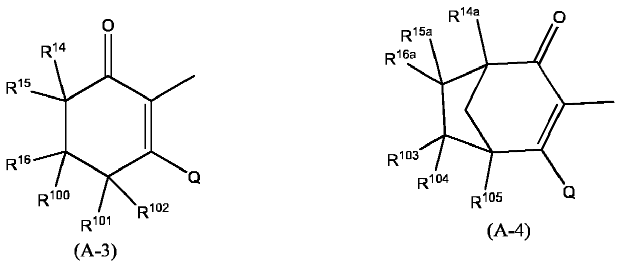
in which W is N, CH, or CR²;
R is a hydrogen or halogen atom; a straight or branched alkyl, alkenyl or alkynyl group containing up to six carbon atoms, said group optionally being substituted by one or more halogen atoms; a cycloalkyl group containing from 3 to 6 carbon atoms, said group optionally being substituted by one or more groups R⁵, one or more halogen atoms, or a group -CO₂R³; or a group selected from -CO₂R³, - COR⁵, cyano, nitro, -CONR³R⁴ or -S(O)ₖR¹³;
R¹ is a straight or branched alkyl, alkenyl or alkynyl group containing up to six carbon atoms, said group optionally being substituted by one or more halogen atoms; or a cycloalkyl group containing from three to six carbon atoms, said group optionally being substituted by one or
more groups R⁵ or one or more halogen atoms;
R² is a halogen atom; a straight or branched alkyl, alkenyl or alkynyl group containing up to six carbon atoms, said group optionally being substituted by one or more halogen atoms, or one or more groups -OR⁵; or R² is a group selected from nitro, cyano, -CO₂R⁵, -S(O)ₚR⁶, -O(CH₂)ₘOR⁵, -COR⁵, -NR¹¹R¹², -N(R⁸)SO₂R⁷, -N(R⁸)CO₂R⁷, -OR⁵, -OSO₂R⁷, -SO₂NR³R⁴, -CONR³R⁴, -CSNR³R⁴, -(CR⁹R¹⁰)_{y}-S(O)_{q}R⁷, or -SF₅;
or two groups R², on adjacent carbon atoms of the ring may, together with the carbon atoms to which they are attached, form a 5 to 7 membered saturated or unsaturated heterocyclic ring containing up to three ring heteroatoms selected from nitrogen, oxygen and sulfur,
which ring is optionally substituted by one or more groups selected from halogen, nitro, -S(O)ₚR¹³, C₁₋₄ alkyl, C₁₋₄ alkoxy,
C₁₋₄ haloalkyl, C₁₋₄ haloalkoxy, =O (or a 5-or 6-membered cyclic acetal thereof), and =NO-R³, it being understood that a sulphur atom,
where present in the ring, may be in the form of a group -SO₂- or -SO-;
z is an integer of one to four, wherein when z is greater than one, the groups R² may be the same or different;
R³, R⁴, and R¹⁰⁹ are each independently a hydrogen atom, or a straight or branched alkyl group containing up to six carbon atoms, said group optionally being substituted by one or more halogen atoms;
R⁵ and R¹¹⁰ are each independently a straight or branched alkyl group containing up to six carbon atoms, said group optionally being substituted by one or more halogen atoms, one or more groups R¹⁷, a C₁₋₄ alkoxy, or a straight or branched alkenyl or alkynyl group containing from two to six carbon atoms, said group optionally being substituted by one or more halogen atoms;
R⁶ and R⁷, which may be the same or different, are each R⁵; or a phenyl optionally substituted by from one to five groups, which may be the same or different and selected from a halogen atom, a straight or branched alkyl group containing up to six carbon atoms, said group optionally being substituted by one or more halogen atoms, nitro, CO₂R⁵, -S(O)ₚR¹³, -NR¹¹NR¹², -OR⁵, or -CONR³R⁴;
R⁸, R⁹ and R¹⁰ are each a hydrogen atom or R⁶;
R¹¹ and R¹² are each a hydrogen atom or R⁵;
R¹³ and R¹¹¹ are each a straight or branched alkyl group containing up to six carbon atoms, said group optionally being substituted by one or
more halogen atoms;
R¹⁷ is a 5 to 7 membered saturated or unsaturated heterocyclic ring containing up to three heteroatoms selected from of O, N, S;
Q is hydroxy, C₁₋₆ alkoxy, OR¹¹², SR¹¹², or SR¹¹¹;
R¹⁴, R^{14a}, R¹⁵, R^{15a}, R¹⁶, R^{16a}, R¹⁰⁰, R¹⁰¹, R¹⁰², R¹³⁰, R¹⁰⁴, and R¹⁰⁵ are each the same or different groups selected from hydrogen, R¹¹⁰, - (CH₂)ᵤCO₂R¹⁰⁹, halogen, cyano, C₁₋₆ alkoxy, -(CH₂)ₓ-[phenyl optionally substituted by one to five groups R¹¹³, which may be the same or different], or cycloalkyl containing from three to six carbon atoms, the group optionally being substituted by C₁₋₆ alkyl or - S(O)ₚR¹¹¹;
R¹¹² is phenyl, optionally substituted by from one to five groups selected from halogen, C₁₋₆ alkyl, C₁₋₆ haloalkyl, C₁₋₆ alkoxy, and nitro;
R¹¹³ is a group selected from halogen, R¹¹⁴, nitro, cyano, -CO₂R¹¹⁵, S(O)ₚR¹¹¹,-OR¹¹¹,orNR¹¹⁵R¹¹⁶;
R¹¹⁴ is a straight or branched alkyl group containing one to three carbon atoms, said group optionally being substituted by one or more halogen atoms;
R¹¹⁵ and R¹¹⁶, which may be the same or different, are each independently a hydrogen atom or R¹¹⁰;
p, q, and u are each independently zero, one, or two;
k and m are each independently one, two, or three;
x is zero or one;
y is an integer from one to four, wherein when y is greater than one, the groups R⁹ and R¹⁰ may be the same or different;
or an agriculturally acceptable salt or metal complex thereof; and
b) a structuring agent selected among smectite clays; and
c) one or more adjuvants.

2. A composition according to claim 1, wherein the amount of herbicidal active compound of the formula (I) compound is 600 g/l or less.

3. A composition according to claim 1 or 2 wherein the herbicidal active compound is selected from the group consisting of isoxazoles, triketones, diketonitriles, and the compounds benzobicyclon and ketospiradox.

4. A composition according to claim 3 wherein the herbicidal active compound is selected among benzobicyclon, ketospiradox, sulcotrione, isoxaflutole, mesotrione, isoxachlortole, tembotrione, and tefuryltrione.

5. A composition according to claim 1, wherein the amount of structuring agent is 100 g/l or less.

6. A composition according to claim 5, wherein the smectite clay is selected among montmorillonite, beidellite, sauconite, stevensite hectorite, saponite, nontronite, vermiculite, and mixtures thereof.

7. A composition according to claim 1, wherein the amount of adjuvant is 800 g/l or less.

8. A composition according to claim 1 further comprising d) one or more thickening agents.

9. A composition according to claim 8, wherein the amount of thickening agent is 50 g/l or less.

10. A composition according to claims 8 or 9, wherein the thickening agent is selected among xanthan gums or carboxy vinyl polymers.

11. A composition according to any of the claims 1 to 10, further comprising e) one or more customary inert formulation auxiliaries.

12. A composition according to claim 11, wherein the inert formulation auxiliaries are selected among pH adjusters, antifreeze agents, preservatives, antifoaming agents, stickers, co-herbicides, UV protectants, and co-solvents.

13. A composition according to any of the claims 1 to 12, wherein the pH is below 4.5.

14. A composition according to any of the claims 1 to 13, wherein the average particle size, as determined by Dv50, in the composition is 20 microns or lower.

15. A composition according to any of the claims 1 to 14 comprising
a) 1-600 g/l of at least herbicidal active compound of the formula (I);
b) 1-100 g/l of a structuring agent selected among smectite clays;
c) 1-800 g/l of one or more adjuvants;
d) 0-50 g/l of one or more thickening agents; and/or
e) 0-500 g/l of one or more customary inert formulation auxiliaries;
and water to 1 liter.

16. A storage and shipping system comprising a container having a capacity of about 0.1 L to about 200 L; and a compatibilized pesticidal formulation according to any of the claims 1 to 15 substantially filling the container.

17. The system of claim 16, wherein the container capacity is about 0.1 L to about 20 L.

18. Use of an aqueous suspension concentrate composition according to any of the claims 1 to 15 diluted with water as a herbicide for the control of undesired plant growth.
